# EUROPEAN PATENT APPLICATION

(11) **EP 1 696 191 A1**
(43) Date of publication of application: **30.08.2006**
(21) Application number: 05028676.4
(22) Date of filing: 29.12.2005
(51) Int. Cl.: F25C 1/14

(54) **Method of manufacturing an ice making cylinder used for an auger type ice making machine**

(30) Priority: 10.02.2005 JP 2005034905
(71) Applicant: HOSHIZAKI DENKI KABUSHIKI KAISHA, Toyoake-shi, Aichi-ken (JP)
(72) Inventor: Mizutani, Yasuki c/o Hoshizaki Denki K.K., Toyoake-shi, Aichi-ken (JP); Sugie, Hiroyuki c/o Hoshizaki Denki K.K., Toyoake-shi, Aichi-ken (JP); Nomura, Tomohito c/o Hoshizaki Denki K.K., Toyoake-shi, Aichi-ken (JP); Matsuo, Kazunori c/o Howa Textile Industry Co.,Ltd, Kasugai-shi, Aichi 486-0969 (JP)
(74) Representative: Kuhnen & Wacker

(57) **Abstract**

A roller (25) is moved in an axial direction with an outer peripheral end (25b) of the roller (25) pressed against an inner peripheral surface (10a) of an ice making cylinder (10). When the roller (25) is moved while being rotated in a state of being pressed against the inner peripheral surface (10a), the inner peripheral surface (10a) is plastically deformed. As a result, longitudinal grooves (15) having a V-shaped cross-section are formed. By repeating the operation of moving the roller (25) in the axial direction with its angle changed each time in a circumferential direction of the ice making cylinder (10), a large number of longitudinal grooves (15) are formed along the axial direction in the inner peripheral surface (10a) of the ice making cylinder (10).

## Description

### BACKGROUND OF THE INVENTION

### 1. Field of the Invention

The present invention relates to a method of manufacturing an ice making cylinder used for an auger type ice making machine.

### 2. Description of the Related Art

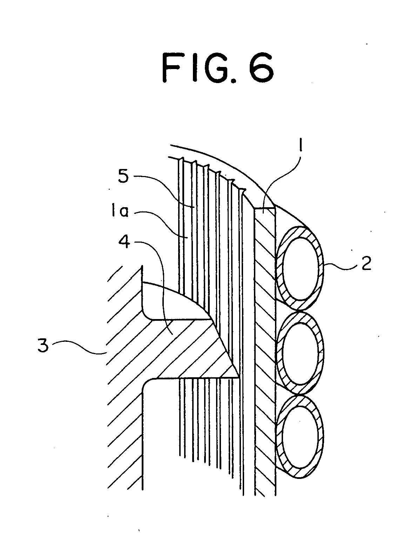

According to the conventional technology for an auger type ice making machine disclosed in, for example, Japanese Utility Model Application Laid-open No. Sho 58-76070, as shown in FIG. 6, cooling pipes 2 are wound around an outer peripheral surface of an ice making cylinder 1, and an auger 3 is rotatably provided inside the ice making cylinder 1 coaxially with a longitudinal axis of the ice making cylinder 1. The auger 3 is provided with a helical blade 4. A large number of longitudinal grooves 5are formed in an inner peripheral surface 1a of the ice making cylinder 1 in an axial direction of the auger 3.

Ice making water is supplied into the ice making cylinder 1, and ice forms on the inner peripheral surface 1a of the ice making cylinder 1. The ice formed thereon is chipped off by the helical blade 4 of the rotating auger 3, transferred upward while being stirred up through screw feed of the auger 3, and then compressed to be made into chipped ices.

In order to transfer the chipped-off ice upward as described above, the ice making cylinder 1 must ensure that the ice does not rotate together with the auger 3. In this case, the longitudinal grooves 5 formed in the inner peripheral surface 1a of the ice making cylinder 1 serve to realize the smooth upward transfer of the ice without causing it to rotate in a circumferential direction.

The longitudinal grooves 5 have so far been formed by being ground with a grinding stone or being cut with a cutting tool or the like.

Another invention is disclosed in Japanese Utility Model Application Laid-open No.Sho 59-18363. According to this invention, such longitudinal grooves are formed in an inner peripheral surface of an ice making cylinder, and finished cuts are formed among the respective longitudinal grooves in the inner peripheral surface of the ice making cylinder in a direction parallel thereto by means of cutting.

However, the longitudinal grooves 5 as shown in FIG. 6 cannot be increased in depth and their finished shapes differ widely when they are formed by means of grinding with a grinding stone. On the other hand, a cutting tool tends to chatter during the cutting operation when the longitudinal grooves 5 are formed by means of cutting. As a result, the finished surfaces of the longitudinal grooves 5 may become coarse, and the cutting tool may be damaged, resulting in chipping or the like of the cutting tool.

Furthermore, there is also a problem in that residual tensile stress is generated in the vicinity of the surfaces of the finished longitudinal grooves 5, causing a decrease in the fatigue strength of the material for the ice making cylinder 1 both in the case of grinding and in the case of cutting. In the case of cutting, in particular, a rupture may occur from the longitudinal grooves 5 if they are formed with an increased depth.

### SUMMARY OF THE INVENTION

The present invention has been made to solve the above-mentioned problems. It is therefore an object of the present invention to provide a method of manufacturing an ice making cylinder which is provided with longitudinal grooves having a reduced degree of differences in finished shape and a smooth finished surface and which prevents a decrease in the fatigue strength of the material for the ice making cylinder.

A method of manufacturing an ice making cylinder used for an auger type ice making machine according to the present invention is characterized in that a longitudinal groove is formed in an inner surface of the ice making cylinder, which faces an auger, along an axial direction by means of burnishing.

### BRIEF DESCRIPTION OF THE DRAWINGS

FIG. 1 is a view showing the overall construction of an auger type ice making machine employing an ice making cylinder manufactured through a method to the embodiment of the present invention.
FIG. 2 is a schematic view showing how an inner peripheral surface of the ice making cylinder shown in FIG. 1 is burnished.
FIG. 3 is a plan view of a burnishing device used for burnishing.
FIG. 4 is a front view showing the shape of a tip portion of the burnishing device as viewed from a direction indicated by arrow A of FIG. 3.
FIG. 5 is a sectional view showing a part of the ice making cylinder in which longitudinal grooves are formed by means of burnishing.
FIG. 6 is a perspective view showing a region surrounding an inner peripheral surface of an ice making cylinder of a conventional auger type ice making machine.

### DESCRIPTION OF THE PREFERRED EMBODIMENTS

An embodiment of the present invention will be described hereinafter with reference to the drawings.

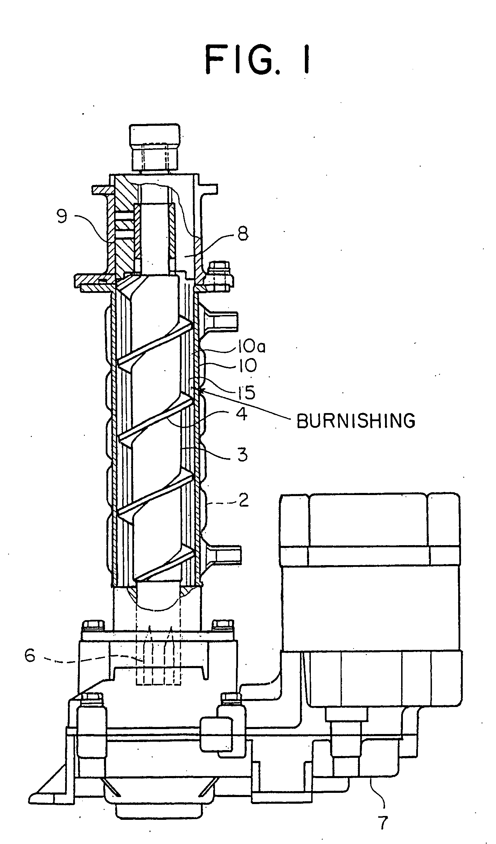

FIG. 1 shows the overall construction of an auger type ice making machine employing an ice making cylinder manufactured through a method according to the embodiment of the present invention.

An auger 3 having on an outer periphery thereof helical blades 4, which are formed spirally, is provided inside a cylindrical ice making cylinder 10. The auger 3 is rotatably supported at an upper end portion thereof and a lower end portion thereof concentrically with a longitudinal axis of the ice making cylinder 10. Splines 6 are formed at the lower end portion of the auger 3. The auger 3 is coupled via the splines 6 to a geared motor 7 equipped with reduction gears and a drive motor. On the other hand, a fixed blade 9 having a compression passage 8 is provided in an upper portion of the ice making cylinder 10.

A large number of longitudinal grooves 15 are formed in an inner peripheral surface 10a as an inner surface of the ice making cylinder 10 by means of burnishing. The longitudinal grooves 15 are formed along a longitudinal direction of the auger 3.

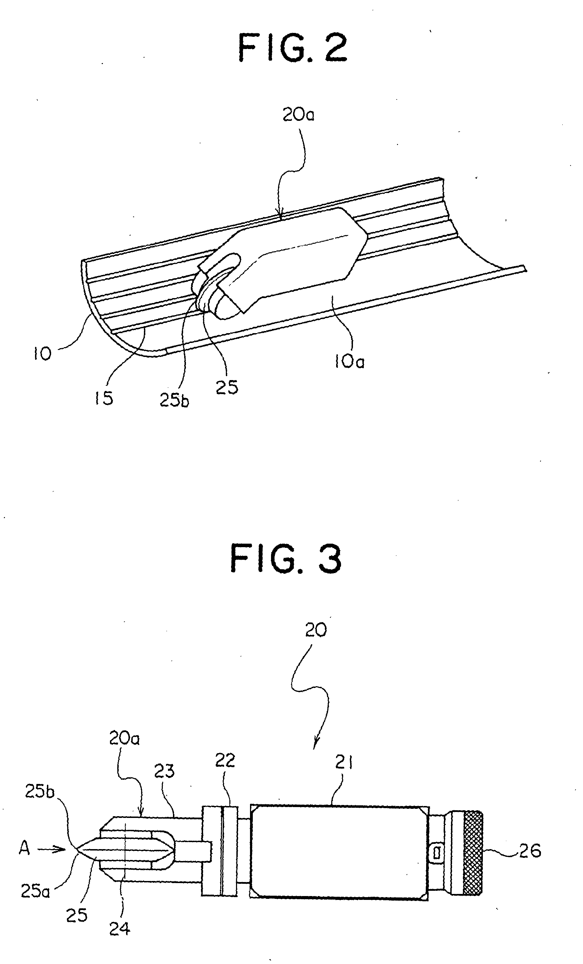

Next, a method of forming the longitudinal grooves 15 by means of burnishing will be described with reference to FIGS. 2 to 5.

FIG. 2 shows a part of the cylindrical ice making cylinder 10 and a tip portion 20a of a burnishing device 20 for burnishing. FIG. 3 shows the overall construction of the burnishing device 20.

After the inner peripheral surface 10a of the ice making cylinder 10 has been cylindrically worked, the longitudinal grooves 15 are formed one by one in the inner peripheral surface 10a using the burnishing device 20.

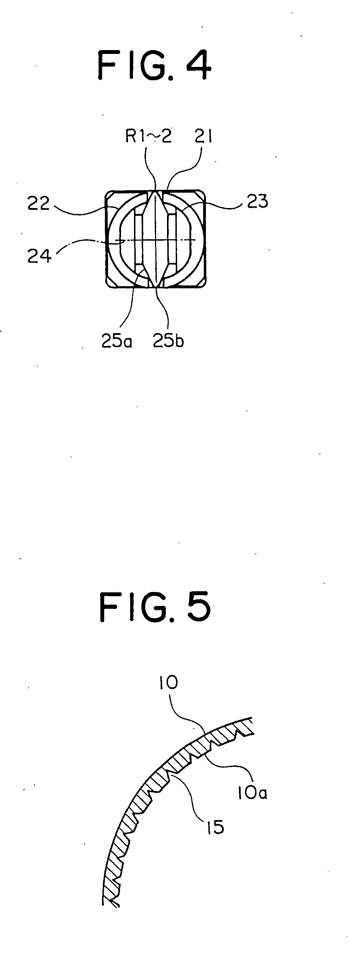

FIG. 3 is a plan view of the burnishing device 20. FIG. 4 is a front view of the burnishing device 20 of FIG. 3 as viewed from the direction indicated by arrow A.

As shown in FIG. 3, a roller holder 23 is connected to a tip of a body 21 via a head joint 22. The roller holder 23 is provided with a roller 25, which is rotatable around a roller supporting axial center 24 that is perpendicular to a longitudinal direction of the body 21. The roller 25 assumes a circular disc shape with its outer peripheral portion 25a pointed in a tapered manner. An outer peripheral end 25b of a tip of the roller 25, which is pointed in a tapered manner, is formed with a corner roundness of R1 to R2. In other words, the outer peripheral end 25b is formed in the shape of an arc having a radius of 1 to 2 mm (see FIG. 4).

A preload adjusting knob 26 for adjusting an initial pressing load that is applied to the ice making cylinder 10 as a work piece when the roller 25 is pressed thereagainst is provided at a rear end of the body 21. The body 21 is mounted on a mounting table (not shown), which is adapted to position the body 21 with respect to the ice making cylinder 10.

The burnishing device 20 constructed as described above is mounted to a drive unit (not shown) capable of moving reciprocally. As shown in FIG. 2, the outer peripheral end 25b of the roller 25 as a tool is pressed against the inner peripheral surface 10a of the ice making cylinder 10 fixed and mounted as a work piece while the roller 25 is moved in an axial direction of the ice making cylinder 10. The roller 25 is moved while being rotated and pressed against. the inner peripheral surface 10a, thereby causing the inner peripheral surface 10a to be plastically deformed. Then, the longitudinal grooves 15 having a V-shaped cross-section as shown in FIG. 5, which corresponds in shape to the outer peripheral portion 25a including the outer peripheral end 25b of the roller 25, are formed. By repeating the operation of moving the roller 25 in the axial direction with its angle changed each time in a circumferential direction of the ice making cylinder 10, a large number of longitudinal grooves 15 are formed in the inner peripheral surface 10a of the ice making cylinder 10 along the axial direction.

When burnishing is adopted to form the longitudinal grooves 15 in the inner peripheral surface 10a of the ice making cylinder 10 as described above, the longitudinal grooves 15 can be deepened while maintaining a more uniform cross-sectional shape in comparison with the case of cutting or grinding. Despite such an increased depth of the longitudinal grooves 15, it is unlikely that a rupture will occur therefrom.

When burnishing is adopted, the roller 25 for forming the longitudinal grooves 15 abrades less and the shapes of the finished longitudinal grooves 15 differ less widely in comparison with a case where a cutting tool or a grinding tool is used. Therefore, owing to the less widely differing shapes of the longitudinal grooves 15, ice attached to the inner peripheral surface 10a becomes unlikely to move in a rotational direction across the longitudinal grooves 15 after having been chipped off by the auger 3, and are reliably transferred upward through screw feed of the auger 3.

Further, no chatter is generated unlike the case of cutting, so smooth finished surfaces of the longitudinal grooves 15 can be obtained.

A surface of the ice making cylinder 10 in which the longitudinal grooves 15 are formed hardened by burnishing, so a residual compression stress is generated in the vicinity of the surface. Thus, the fatigue strength of the material in the vicinity of the longitudinal grooves 15 of the ice making cylinder 10 can be kept from decreasing.

Although the embodiment of the present invention has described the case of roller burnishing in which the roller 25 is used as a burnishing tool, the present invention is not limited thereto. Any tool other than the roller 25 can be employed as long as it can be pressed against the inner peripheral surface 10a of the ice making cylinder 10 to plastically deform it.

## Claims

1. A method of manufacturing an ice making cylinder (10) used for an auger type ice making machine, **characterized by** comprising the step of forming a longitudinal groove (15) along an axial direction of the ice making cylinder (10) in an inner surface (10a) of the ice making cylinder (10), which faces an auger (3), by burnishing.

2. A method according to claim 1, **characterized by** further comprising the steps of:
i) pressing a tool (25) of a burnishing device (20) against the inner surface (10a) of the ice making cylinder (10) which faces the auger (3); and
ii) moving the tool (25) along the axial direction of the ice making cylinder (10) while holding the tool (25) pressed against the inner surface (10a) of the ice making cylinder (10), toplastically deform the inner surface (10a) of the ice making cylinder (10), and
**characterized in that** the longitudinal groove (15) is formed along the axial direction in the inner surface (10a) of the ice making cylinder (10) through steps i) and ii).

3. A method according to claim 2, **characterized in that** steps i) and ii) are repeated with the tool (25) changed in position in a circumferential direction of the ice making cylinder (10) to form a plurality of the longitudinal grooves (15) in the inner surface (10a) of the ice making cylinder (10).

4. A method according to any one of claims 1 to 3, **characterized in that** the longitudinal groove (15) has a V-shaped cross-section.

5. An ice making cylinder (10) used for an auger type ice making machine, which is manufactured through a method according to any one of claims 1 to 4.
